# FASCICULE DE BREVET EUROPEEN

(11) **EP 4 259 927 B1**
(45) Date de publication et mention de la délivrance du brevet: **18.09.2024**
(21) Numéro de dépôt: 21823632.1
(22) Date de dépôt: 12.11.2021
(51) Int. Cl.: F03D 13/10, F03D 13/25

(54) **PROCÉDÉ D'ASSEMBLAGE D'UN PARC ÉOLIEN OFFSHORE FLOTTANT**
VERFAHREN ZUR MONTAGE EINES SCHWIMMENDEN OFFSHORE-WINDPARKS
METHOD FOR ASSEMBLING A FLOATING OFFSHORE WIND FARM

(30) Priorité: 10.12.2020 FR 2013023
(43) Date de publication de la demande: 18.10.2023
(73) Titulaire: Bourbon Offshore Gaia, 13007 Marseille (FR)
(72) Inventeur: BELENFANT, Patrick, 13080 Aix en Provence (FR); DUQUENNOY, Philippe, 83470 Saint Maximin la Sainte Baume (FR); BOUCARD, Julien, 13004 Marseille (FR); COMBESCURE, Christophe, 13006 Marseille (FR)
(74) Mandataire: Germain Maureau
(86) Numéro de dépôt international: PCT/FR2021/052003
(87) Numéro de publication internationale: WO 2022/123130

(56) Documents cités:
- WO-A1-2016/138088
- WO-A1-2019/034281
- WO-A1-2019/106283

## Description

### [Domaine technique]

L'invention se rapporte à un procédé d'assemblage d'un parc éolien offshore flottant, pour un assemblage dans une étendue d'eau - généralement en mer - de plusieurs centrales éoliennes offshore flottantes.

### [Etat de la technique]

De manière classique, une centrale éolienne offshore flottante comprend une éolienne montée sur une structure flottante, une telle éolienne comprenant au moins un mât fixé sur la structure flottante et composé d'un empilement de plusieurs sections de mât, une turbine fixée sur un sommet du mât, et des pâles accouplées à la turbine.

L'invention trouve une application favorite, et non limitative, pour des centrales éoliennes offshore flottantes développant une puissance d'au moins 2,5 MW (MégaWatts), voire au-delà avec des puissances pouvant atteindre 12 MW, 15 MW, 20 MW ou plus.

De manière connue, la structure flottante, aussi appelée flotteur, forme une structure de type semi-submersible, munie d'un système d'ancrage pour ancrer la structure flottante au fond sous- marin. Pour une application aux centrales éoliennes offshore flottantes, différentes structures flottante de type semi-submersible sont connues, comme par exemple et à titre non limitatif :
- une structure flottante comprenant au moins trois colonnes (généralement en béton et/ou acier), chaque colonne comprenant une partie non-immergée et une partie immergée, et des éléments de liaison pour relier rigidement les colonnes les unes aux autres, comme connu des documents FR3093699, FR3093074, EP3342699, EP3546337, WO2019/034281 et WO2015120227 ; ou
- une structures flottante annulaire, généralement en béton et/ou acier, par exemple de forme rectangulaire, carrée ou triangulaire, comme connu des documents EP1 106825, WO2019/106283 et EP2668090.

Pour le montage d'une centrale éolienne offshore flottante, la pratique est d'approcher la structure flottante d'un quai sur lequel est prévue une grue présentant une hauteur et une capacité de levage adaptées pour pouvoir lever les sections de mât afin de les empiler sur la structure flottante, puis lever la turbine pour la fixer au sommet du mât et enfin lever les pâles pour les accoupler à la turbine, comme par exemple connu du document WO2016/138088. Ces opérations doivent être répétées pour chaque centrale éolienne offshore flottante, généralement avec une grue unique, parfois spécialement conçue pour répondre à des tels enjeux en termes de capacité de levage et de hauteur. A titre d'exemple, la hauteur du mât peut dépasser 100 mètres et peut atteindre 120 mètres pour une puissance de 12 MW, voire 160 mètre pour une puissance de 20 MW, les sections de mât peuvent peser de 30 à 200 tonnes, une turbine peut peser de 400 à 650 tonnes voire au-delà, et chaque pâle peut peser de 20 à 60 tonnes voire au-delà.

Dans ce contexte, lorsqu'il s'agit de monter plusieurs centrales éoliennes offshore flottantes, la disponibilité du quai, et en particulier la longueur disponible du quai, la profondeur au niveau du quai, et la capacité structurelle du quai à supporter une grue de levage bord à quai de capacité suffisante pour les charges à lever, devient une contrainte logistique et géographique qui détermine le planning d'installation et d'assemblage des centrales éoliennes offshore flottantes, et par conséquent le planning de production d'électricité et le coût de lancement de la production.

Par ailleurs, pour répondre aux exigences accrues en matière de hauteur et de poids, conséquences directes de l'augmentation des puissances, il devient souvent obligatoire de recourir à une construction préalable d'une grue dédiée, voire également à une construction d'un quai dédié ou à une adaptation (renforcement, allongement) d'un quai existant à cause de la capacité de la grue et de sa proximité du quai, augmentant ainsi à la fois les délais et les coûts pour assembler les centrales éoliennes offshore flottantes.

### [Résumé de l'invention]

La présente invention vise à résoudre en tout ou partie les problèmes précités, en proposant un procédé d'assemblage d'un parc éolien offshore flottant qui permette d'être moins dépendant des contraintes de quai, avec un coût réduit comparativement à l'emploi d'une grue sur quai, et ce quelle que soit la puissance des centrales éoliennes offshore flottantes (donc quelle que soit la hauteur et le poids des éléments constitutifs de l'éolienne).

Un autre but de l'invention est de réduire le temps d'assemblage et ainsi permettre une mise en production plus rapide du parc éolien offshore flottant

A cette fin, l'invention propose un procédé d'assemblage d'un parc éolien offshore flottant, pour un assemblage dans une étendue d'eau d'au moins N centrales éoliennes offshore flottantes, N étant un entier supérieur ou égal à 3, dans lequel chaque centrale éolienne offshore flottante comprend au moins une éolienne montée sur une structure flottante, une telle éolienne comprenant un assemblage de plusieurs éléments constitutifs incluant au moins un mât fixé sur la structure flottante et composé d'un empilement de plusieurs sections de mât, une turbine fixée sur un sommet du mât, et des pâles accouplées à la turbine,
ce procédé d'assemblage d'un parc éolien offshore flottant comprenant les étapes suivantes :
   - fournir et disposer au moins N structures flottantes sur l'étendue d'eau ;
   - fournir une pluralité de sections de mât pour assembler au moins N mâts ;
   - fournir des turbines et des pâles pour au moins N éoliennes ;
ce procédé d'assemblage d'un parc éolien offshore flottant étant remarquable en ce qu'il comprend les étapes suivantes :
   - sélectionner, parmi les au moins N structures flottantes, au moins une structure flottante appelée structure flottante de montage, les autres structures flottantes étant appelées structures flottantes réceptrices ;
   - fixer un engin de levage sur la structure flottante de montage ;
   - approcher la structure flottante de montage de l'une des structures flottantes réceptrices, et utiliser l'engin de levage pour lever et monter sur ladite structure flottante réceptrice l'un au moins des éléments constitutifs de l'éolienne ;
   - répéter l'étape précédente pour les autres structures flottantes réceptrices.

Ainsi l'invention propose d'utiliser l'une des structures flottantes de la série comme support d'un engin de levage, ce qui permettra à la structure flottante de montage de lever en rade ou en mer tout ou partie des éléments constitutifs de l'éolienne, tels que les pâles et éventuellement les sections de mât et la turbine en fonction de la capacité de l'engin de levage présent sur la structure flottante de montage.

D'un point de vue économique, cette solution est particulièrement intéressante car elle s'appuie sur une structure flottante de montage qui est extraite d'une série de plusieurs structures flottantes fabriquées à grande échelle (selon la taille du champ éolien), contribuant donc à une économie d'échelle et ainsi à un coût réduit de fabrication de la structure flottante de montage (coût dilué dans le coût de fabrication des au moins N structures flottantes).

D'un point de vue logistique, cette solution est tout autant intéressante car elle permet de moins dépendre, voire de ne pas dépendre, d'un quai pour assembler les éoliennes sur les structures flottantes réceptrices.

Bien entendu, au sens de l'invention, il est envisageable de prévoir deux ou plus structures flottantes de montage avec engin de levage, pour accélérer le montage des éoliennes.

Il est également envisageable, au sens de l'invention, que chaque centrale éolienne offshore flottante comprenne une ou plusieurs éoliennes sur sa structure flottante, autrement dit la structure flottante supporte une ou plusieurs éoliennes. Aussi, dans le cadre de l'invention, une fois que la structure flottante de montage est accouplée à une structure flottante réceptrice, l'engin de levage pourra servir à monter l'un au moins des éléments constitutifs d'une éolienne, voire de deux ou plus éoliennes, selon le nombre d'éolienne à monter sur cette structure flottante réceptrice.

Enfin, le procédé selon l'invention permet d'ériger des éoliennes dans un lieu autre qu'un port, notamment dans une baie abritée, un golf marin tel qu'une ria ou une zone d'échouage ou étendue d'eau généralement en mer, plus proche du lieu du site de production, réduisant ainsi les temps de transit entre le lieu d'assemblage et le lieu de production, ce qui diminue également le risque météorologique et l'économie globale du projet.

Dans un premier mode de réalisation, le procédé comprend la fixation d'un mât sur la structure flottante de montage, par empilement de plusieurs sections de mât parmi la pluralité de sections de mât, et dans lequel l'engin de levage est fixé sur le sommet du mât prévu sur la structure flottante de montage.

Ainsi, l'engin de levage est fixé sur un mât qui a été assemblé par empilement de plusieurs sections de mât, ce qui permet de monter suffisamment haut l'engin de levage en utilisant un mât d'éolienne, avec l'avantage de faire une économie d'échelle en utilisant un mât produit à grande échelle pour le parc, et ainsi réduire le coût de fabrication.

Dans un second mode de réalisation, l'engin de levage comprend une structure de levage ayant une hauteur suffisante pour lever et monter sur la structure flottante réceptrice l'ensemble des éléments constitutifs de l'éolienne.

Ainsi, la structure flottante de montage est équipée d'un engin de levage permettant de lever les différents éléments tels que turbine, mât, et pâles.

Dans le premier mode de réalisation, et également dans le second mode de réalisation, le mât et/ou l'engin de levage peut être monté sur la structure flottante de montage par une « petite » grue bord à quai de plus petite taille qu'une « grosse » grue classiquement prévue pour installer une turbine à quai. L'intérêt économique est donc de s'affranchir d'une « grosse » grue de quai permettant de lever de forte charge à grande hauteur. Par ailleurs, le poids et la descente de charge de la « petite » grue étant plus faible, le quai et son arrière quai auront besoin de moins de renforts.

Dans une réalisation avantageuse, une fois que la structure flottante de montage est approchée de la structure flottante réceptrice, au moins un dispositif d'écartement inférieur est intercalé entre la structure flottante réceptrice et la structure flottante de montage pour maintenir un écartement minimal.

Il est à noter que, au sens de l'invention, le rapprochement entre la structure flottante de montage et la structure flottante réceptrice peut se faire en déplaçant l'une et/ou l'autre de ces deux structures flottantes, par exemple au moyen d'un bateau remorqueur. Le ou les dispositifs d'écartement inférieur ont pour but de maintenir l'écartement minimal entre ces deux structures flottantes et avantageusement limiter les déplacements relatifs entre ces deux structures flottantes.

Avantageusement, le ou chaque dispositif d'écartement inférieur présente un degré de liberté en translation selon une direction verticale, afin de permettre un déplacement relatif vertical entre les deux structures flottantes.

Selon une possibilité, l'au moins un dispositif d'écartement inférieur est préalablement fixé sur la structure flottante de montage et est fixé sur la structure flottante réceptrice à la suite du rapprochement avec la structure flottante de montage, permettant ainsi d'utiliser le(s) même(s) dispositif(s) d'écartement inférieur pour les différentes structures flottantes réceptrices.

De cette manière, le ou chaque dispositif d'écartement inférieur est fixé à la fois sur la structure flottante de montage et sur la structure flottante réceptrice, ce qui permet de maintenir solidaires ces deux structures flottantes et ainsi verrouiller des degrés de liberté entre les deux structures flottantes pour faciliter le montage sur la structure flottante réceptrice du ou des éléments de l'éolienne depuis la structure flottante de montage.

La hauteur et le secteur angulaire du ou des dispositifs d'écartement inférieur permettent en outre de reprendre après amarrage les efforts relatifs entre les deux structures flottantes pour des conditions de vent et de mer, en rade ou en baie.

Il est avantageux d'avoir au moins deux, voire au moins trois, dispositifs d'écartement inférieur entre les deux structures flottantes.

Selon une possibilité adaptée au premier mode de réalisation, au moins un dispositif d'écartement supérieur est fixé sur le mât prévu sur la structure flottante de montage, et est fixé sur un mât érigé sur la structure flottante réceptrice à la suite du rapprochement de la structure flottante de montage et de l'érection d'un tel mât sur la structure flottante réceptrice, permettant ainsi de limiter les déplacements relatifs entre ces deux mâts.

Selon une possibilité adaptée au second mode de réalisation, au moins un dispositif d'écartement supérieur est fixé sur la structure de levage de l'engin de levage prévu sur la structure flottante de montage, et est fixé sur un mât érigé sur la structure flottante réceptrice à la suite du rapprochement de la structure flottante de montage et de l'érection d'un tel mât sur la structure flottante réceptrice.

De cette manière, le ou chaque dispositif d'écartement supérieur est fixé à la fois sur le mât ou la structure de levage prévu sur la structure flottante de montage et sur le mât de la structure flottante réceptrice, ce qui permet de maintenir solidaires et donc parallèles ces deux mâts ou la structure de levage et le mât.

Avantageusement, le ou chaque dispositif d'écartement supérieur présente un degré de liberté en translation selon une direction verticale, afin de permettre un déplacement relatif vertical entre les deux mâts.

De manière encore avantageuse, l'au moins un dispositif d'écartement inférieur est équipé d'au moins un amortisseur. De même, il est envisageable que l'au moins un dispositif d'écartement supérieur est équipé d'au moins un amortisseur.

L'amortisseur peut être un amortisseur de contact, dans un matériau élastiquement compressible (par exemple caoutchouc ou équivalent) ou selon une structure compressible ajustable (par exemple un ressort compressible ou un piston amortisseur).

Selon une caractéristique, un système de ballastage est prévu sur la structure flottante de montage pour ajuster une hauteur de l'engin de levage lors de son utilisation pour lever et monter sur la structure flottante réceptrice l'un au moins des éléments constitutifs de l'éolienne.

La structure flottante de montage pourra ainsi avoir un tirant d'eau maîtrisé, par exemple de l'ordre de 2 mètres sous la structure flottante de montage, et celle-ci pourra utiliser son propre système de ballastage pour compenser le marnage ou hauteur de marée (différence de niveau entre la marée haute et la marée basse d'une marée) et également les effets des transferts de charge lors du levage si besoin.

Il peut notamment être avantageux de ballaster la structure flottante de montage pour des levages lourds, c'est-à-dire au-delà d'un seuil prédéfini, afin de ne pas avoir d'efforts parasites dans le ou les dispositifs d'écartement inférieur.

Selon une première réalisation, l'engin de levage est utilisé pour lever et monter sur la structure flottante réceptrice les pâles de l'éolienne jusqu'à la turbine, après avoir préalablement montés le mât et la turbine sur ladite structure flottante réceptrice.

Autrement dit, il est envisageable d'utiliser l'engin de levage de la structure flottante de montage pour lever les pâles jusqu'à la turbine montée au sommet du mât prévu sur la structure flottante réceptrice ; étant noté que le mât et/ou la turbine peuvent avoir été montés au moyen de ce même engin de levage, ou par un autre moyen (comme par exemple au moyen d'une grue sur quai).

Selon une deuxième réalisation, l'engin de levage est utilisé pour lever et monter sur la structure flottante réceptrice le mât de l'éolienne, en levant et montant au fur et à mesure les sections de mât correspondantes au moyen de l'engin de levage.

Autrement dit, il est envisageable d'utiliser l'engin de levage de la structure flottante de montage pour lever les sections de mât et ainsi assembler un mât sur la structure flottante réceptrice ; étant noté que la turbine et/ou les pâles peuvent être montées ultérieurement au moyen de ce même engin de levage, ou par un autre moyen (comme par exemple au moyen d'une grue sur quai).

Selon une troisième réalisation, l'engin de levage est utilisé pour lever et monter sur la structure flottante réceptrice la turbine, après avoir préalablement monté le mât sur ladite structure flottante réceptrice.

Autrement dit, il est envisageable d'utiliser l'engin de levage de la structure flottante de montage pour lever la turbine jusqu'au sommet du mât prévu sur la structure flottante réceptrice ; étant noté que le mât peut avoir été monté au moyen de ce même engin de levage, ou par un autre moyen (comme par exemple au moyen d'une grue sur quai) et/ou que les pâles peuvent être montées ultérieurement au moyen de ce même engin de levage, ou par un autre moyen (comme par exemple au moyen d'une grue sur quai).

Selon une possibilité, l'un au moins des éléments constitutifs de l'éolienne, prévu pour être levé et monté sur la structure flottante réceptrice au moyen de l'engin de levage, est préalablement stocké sur un agencement de stockage prévu sur la structure flottante de montage.

Ainsi, la structure flottante de montage supporte un agencement de stockage qui va permettre de stocker sur celle-ci tout ou partie des éléments constitutifs de l'éolienne pour la structure flottante réceptrice, évitant ainsi de multiplier les allers-retours avec la zone terrestre de stockage.

Dans un première possibilité de réalisation, la structure flottante de montage est préalablement amenée en bordure d'un quai ou d'une barge de stockage afin de charger sur l'agencement de stockage l'un au moins des éléments constitutifs de l'éolienne, prévu pour être levé et monté sur la structure flottante réceptrice au moyen de l'engin de levage.

Dans une seconde possibilité de réalisation, en variante de la première possibilité de réalisation précitée, la structure flottante de montage est accostée par un bateau ou une barge transportant l'un au moins des éléments constitutifs de l'éolienne, prévu pour être levé et monté sur la structure flottante réceptrice au moyen de l'engin de levage, afin de le charger sur l'agencement de stockage.

Avantageusement, dans le premier mode de réalisation, le ou les éléments constitutifs de l'éolienne, qui est ou sont levé(s) et monté(s) sur la structure flottante réceptrice au moyen de l'engin de levage, est ou sont guidé(s) le long du mât prévu sur la structure flottante de montage lors du levage, au moyen d'un rail de guidage fixé sur ledit mât.

Un tel rail de guidage est avantageux pour guider verticalement le levage et stabiliser le ou les éléments constitutifs de l'éolienne.

Selon une possibilité, l'engin de levage comprend un système de levage entraînant en monté/descente un câble de levage porté par une flèche et accouplé à un élément d'accrochage, de sorte que le ou les éléments constitutifs de l'éolienne, qui est ou sont levé(s) et monté(s) sur la structure flottante réceptrice au moyen de l'engin de levage, est ou sont accroché(s) audit élément d'accrochage avant d'être monté(s).

Le système de levage peut être un treuil de levage, par exemple électrique ou électrohydraulique et/ou à commande locale ou déportée. Ce système de levage peut être couplé au câble de levage pour un levage en simple brin, ou il peut être couplé au câble de levage via un système de mouflage pour un levage en multi brins, en fonction de la charge à lever. La flèche permet par ailleurs de lever une charge au-dessus du sommet du mât ou de la structure de levage, ce qui est pratique pour la turbine.

Avantageusement, cette flèche est orientable, c'est-à-dire mobile en rotation selon un axe de rotation vertical, et peut optionnellement être relevée/abaissée, c'est-à-dire être mobile en rotation selon un axe de rotation horizontal.

Selon une variante, le système de levage est accouplé à une couronne d'orientation autorisant une rotation de l'engin de levage selon un axe vertical.

Avantageusement, l'élément d'accrochage est accouplé à une pince d'accrochage à plusieurs degrés de liberté munie d'un système de réglage permettant des réglages selon au moins deux degrés de liberté en rotation, et par exemple trois degrés de liberté en rotation, et selon au moins deux degrés de liberté en translation.

L'avantage d'une telle pince d'accrochage est de faciliter le guidage du ou des éléments constitutifs de l'éolienne lors du levage et lors de l'assemblage, en particulier les pâles lorsqu'il faut les centrer sur la turbine et les aligner radialement.

Selon une caractéristique, la structure flottante réceptrice est posée sur un fond de l'étendue d'eau ou est maintenue flottante et ancrée sur le fond de l'étendue d'eau pendant l'utilisation de l'engin de levage pour lever et monter sur ladite structure flottante réceptrice l'un au moins des éléments constitutifs de l'éolienne.

La structure flottante réceptrice peut ainsi être ballastée et posée sur le fond de l'étendue d'eau (par exemple du port ou de la baie), en prenant en compte les variations de marée et les conditions océanographiques et météorologiques, permettant à cette structure flottante réceptrice de rester en place durant les opérations d'installation de son éolienne, et aussi en cas de tempête avant et après le montage de l'éolienne. En variante, la structure flottante réceptrice peut demeurer flottante, tout en étant ancrée sur le fond de l'étendue d'eau.

Selon une autre caractéristique, la structure flottante de montage est posée sur un fond de l'étendue d'eau ou est maintenue flottante et accouplée à la structure flottante réceptrice pendant l'utilisation de l'engin de levage pour lever et monter sur ladite structure flottante réceptrice l'un au moins des éléments constitutifs de l'éolienne.

Avantageusement, les au moins N structures flottantes sont toutes fabriquées sur la base d'une même structure de type semi-submersible.

Dans une réalisation particulière, le parc éolien offshore flottant comprend N centrales éoliennes offshore flottantes et sont fournis N structures flottantes sur l'étendue d'eau, de sorte que la structure flottante de montage est employée pour monter sur (N-1) structures flottantes réceptrices tout ou partie des éléments constitutifs de l'éolienne pour au final obtenir (N-1) centrales éoliennes offshore flottantes et, une fois terminées les opérations de levage et de montage au moyen de l'engin de levage, ledit engin de levage est retiré de la structure flottante de montage afin de permettre de monter une éolienne et ainsi obtenir la N^{ème} centrale éolienne offshore flottante.

Autrement dit, la structure flottante de montage sera utilisée pour former la N^{ème} et dernière centrale éolienne offshore flottante, en y montant sa propre éolienne, cette fois au moyen d'une grue de levage, comme par exemple une grue sur quai. Bien entendu, si deux structures flottantes de montage sont employées, alors l'une et/ou l'autre des deux structures flottantes de montage pourront servir à former une ou deux centrales éoliennes offshore flottantes.

Dans le cadre du premier mode de réalisation, l'engin de levage est retiré du sommet du mât prévu sur la structure flottante de montage afin de permettre de monter sur ledit sommet une turbine et des pâles pour former une éolienne et ainsi obtenir la N^{ème} centrale éolienne offshore flottante

En variante, le parc éolien offshore flottant comprend N centrales éoliennes offshore flottantes et sont fournis (N+1) structures flottantes sur l'étendue d'eau, de sorte que la structure flottante de montage est employée pour monter sur N structures flottantes réceptrices tout ou partie des éléments constitutifs de l'éolienne pour au final obtenir les N centrales éoliennes offshore flottantes et, une fois terminées les opérations de levage et de montage au moyen de l'engin de levage, ladite structure flottante de montage est stockée dans un lieu prédéfini.

Aussi, cette structure flottante de montage pourra par exemple être réutilisée pour le développement d'un nouveau parc éolien offshore flottant similaire ou dont les éoliennes sont de même hauteur ou de hauteur inférieure. Le cas échéant, le ou les dispositifs d'écartement inférieur pourront être adaptés afin de prendre en compte d'autre types de structure flottante.

Cette structure flottante de montage pourra aussi servir à réaliser une maintenance en mer sur le parc éolien offshore flottant issu du procédé selon l'invention, en particulier en cas de dommage aux pâles d'éolienne ou sur des parties de la turbine.

### [Brève description des figures]

D'autres caractéristiques et avantages de la présente invention apparaîtront à la lecture de la description détaillée ci-après, d'exemples de mise en oeuvre non limitatifs, faite en référence aux figures annexées dans lesquelles :
[Fig 1] est une vue schématique en perspective d'une mise en oeuvre d'un procédé d'assemblage selon un premier mode de réalisation de l'invention au début d'une phase de montage d'un mât sur une structure flottante réceptrice, au moyen d'un engin de levage placé au sommet d'un mât prévu sur une structure flottante de montage ;
[Fig 2] est une vue schématique en perspective au cours de la phase de montage du mât sur la structure flottante réceptrice, à la suite de la Figure 1 ;
[Fig 3] est une vue schématique en perspective au cours d'une phase de montage d'une turbine au sommet du mât préalablement monté sur la structure flottante réceptrice, au moyen de l'engin de levage de la structure flottante de montage, à la suite de la Figure 2 ;
[Fig 4] est une vue schématique en perspective au début d'une phase de montage des pâles sur la turbine de la structure flottante réceptrice, au moyen de l'engin de levage de la structure flottante de montage, à la suite de la Figure 3 ;
[Fig 5] est une vue schématique en perspective au cours de la phase de montage des pâles sur la turbine de la structure flottante réceptrice, à la suite de la Figure 4 ;
[Fig 6] est une vue schématique en perspective au cours de la phase de montage des pâles sur la turbine de la structure flottante réceptrice, à la suite de la Figure 5 ;
[Fig 7] est une vue schématique en perspective à la fin de la phase de montage des pâles sur la turbine de la structure flottante réceptrice, à la suite de la Figure 6 ;
[Fig 8] est une vue schématique de côté d'une mise en oeuvre d'un procédé d'assemblage selon un second mode de réalisation de l'invention, à la fin d'une phase de montage d'un mât sur une structure flottante réceptrice, au moyen d'un engin de levage placé sur une structure flottante de montage ;
[Fig 9] est une vue schématique de côté au cours d'une phase de montage d'une turbine au sommet du mât préalablement monté sur la structure flottante réceptrice, au moyen de l'engin de levage de la structure flottante de montage, à la suite de la Figure 8 ;
[Fig 10] est une vue schématique de côté à la fin d'une phase de montage des pâles sur la turbine de la structure flottante réceptrice, au moyen de l'engin de levage de la structure flottante de montage, à la suite de la Figure 9.

### [Description détaillée de modes de réalisation de l'invention]

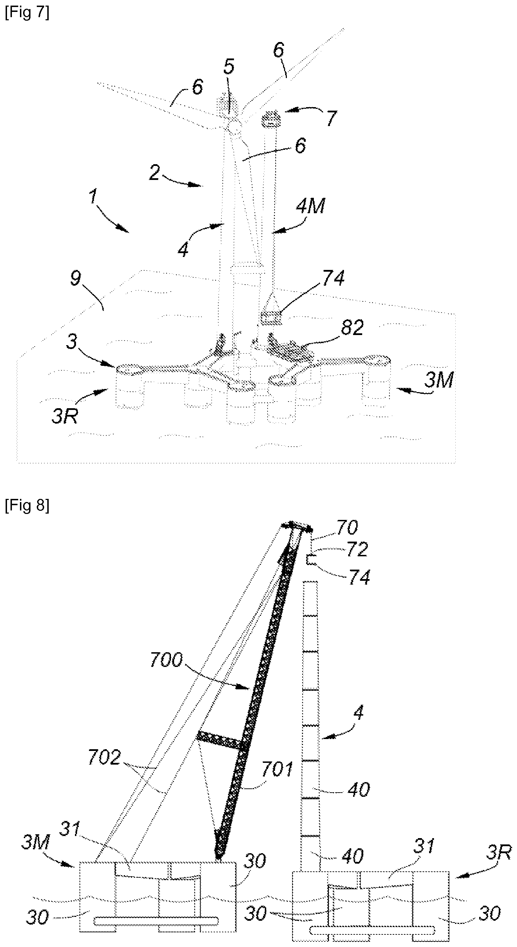

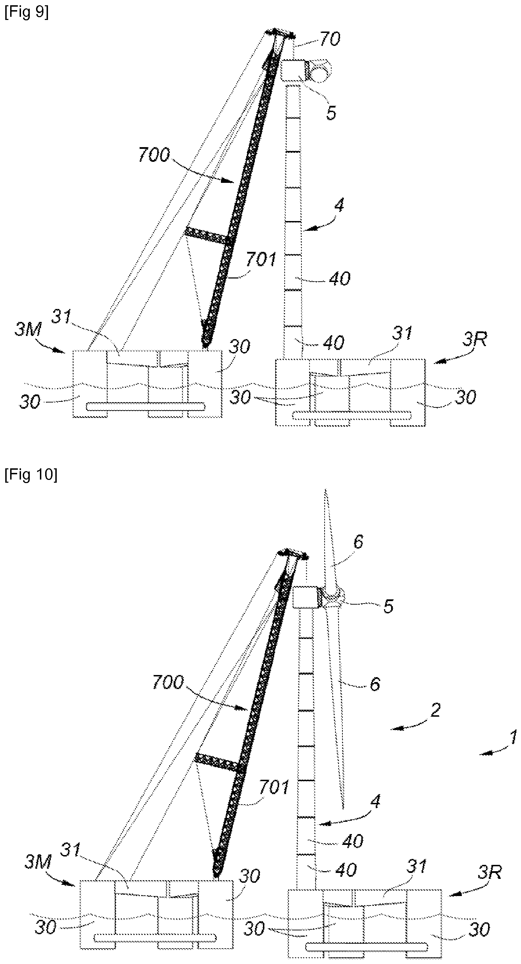

En référence aux Figures, la description qui suit porte sur un procédé d'assemblage d'un parc éolien offshore flottant, pour un assemblage dans une étendue d'eau 9 d'au moins N centrales éoliennes offshore flottantes 1, N étant un entier supérieur ou égal à 3, dans lequel chaque centrale éolienne offshore flottante 1 comprend une éolienne 2 montée sur une structure flottante 3 ; la Figure 7 illustrant une centrale éolienne offshore flottante 1 issue d'un premier mode de réalisation d'un tel procédé et la Figure 10 illustrant une centrale éolienne offshore flottante 1 issue d'un second mode de réalisation d'un tel procédé.

A l'issue du procédé, chaque centrale éolienne offshore flottante 1 comprend donc l'éolienne 2 montée sur la structure flottante 3, où l'éolienne 2 comprend un assemblage de plusieurs éléments constitutifs 4, 40, 5, 6 incluant au moins un mât 4 fixé sur la structure flottante 3 et composé d'un empilement de plusieurs sections de mât 40, une turbine 5 fixée sur un sommet du mât 4, et des pâles 6 accouplées à la turbine 5.

Ce procédé comprend une étape de fournir et disposer au moins N structures flottantes 3 sur l'étendue d'eau 9. Ces structures flottantes 3 sont toutes fabriquées sur la base d'une même structure de type semi-submersible.

Dans l'exemple illustré et non limitatif, la structure de type semi-submersible comprend au moins trois colonnes 30, chaque colonne 30 comprenant une partie non-immergée et une partie immergée, et des éléments de liaison 31 pour relier rigidement les colonnes 30 les unes aux autres. Dans l'exemple illustré, la structure de type semi-submersible comprend quatre colonnes 30, dont une colonne centrale et trois colonnes périphériques réparties autour de la colonne centrale et reliée à cette dernière par les éléments de liaison 31. Bien entendu, d'autres structures semi-submersibles sont envisageables dans le cadre de l'invention.

Le procédé comprend en outre les étapes de fournir une pluralité de sections de mât 40 pour assembler au moins N mâts 4 et de fournir des turbines 5 et des pâles 6 pour au moins N éoliennes 2. Ces éléments constitutifs 4, 40, 5, 6 sont stockés dans un espace de stockage, par exemple à terre, à proximité d'un quai, ou en mer, sur une barge de stockage adaptée.

Le procédé comprend ensuite une étape de sélectionner, parmi les au moins N structures flottantes 3, au moins une structure flottante appelée structure flottante de montage 3M, les autres structures flottantes étant appelées structures flottantes réceptrices 3R. les Figures illustrent toutes la structure flottante de montage 3M à côté de l'une des structures flottantes réceptrices 3R.

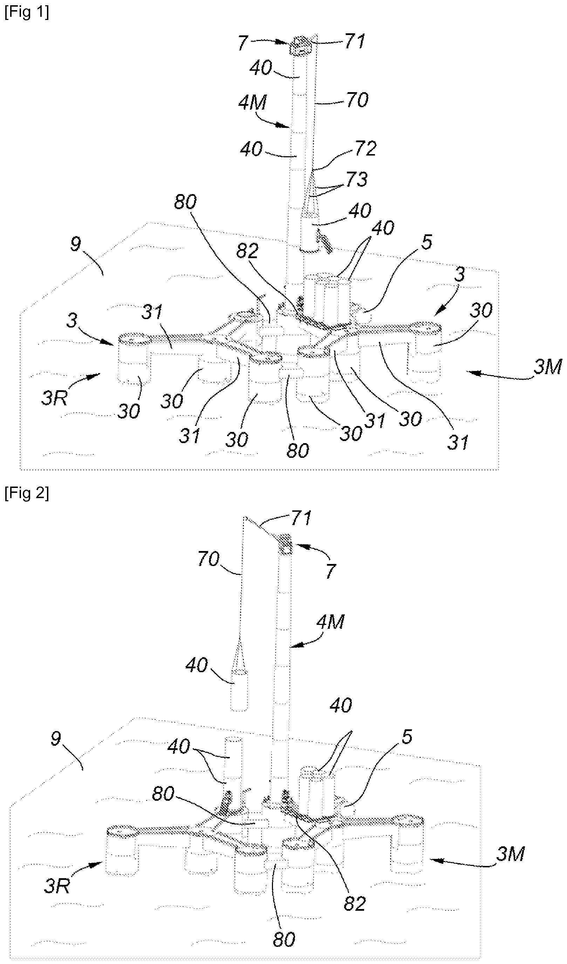

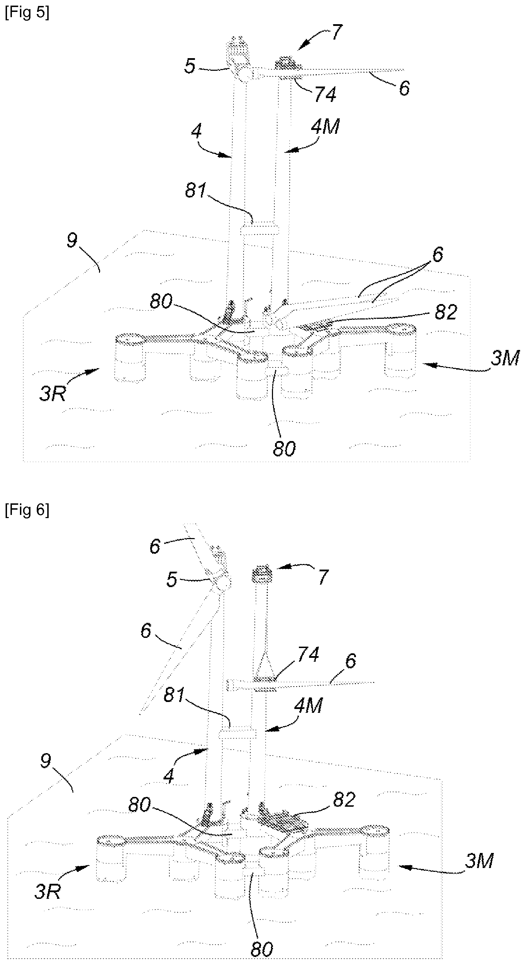

Le procédé est suivi par une fixation d'un engin de levage 7 ou 700 sur la structure flottante de montage 3M. Deux modes de réalisation peuvent être envisagés, à savoir le premier mode de réalisation illustré sur les Figures 1 à 7 et associé à l'engin de levage 7, et le second mode de réalisation illustré sur les Figures 8 à 10 et associé à l'engin de levage 700.

Dans le premier mode de réalisation, il est d'abord prévue une étape pour fixer un mât 4M sur la structure flottante de montage 3M, par empilement de plusieurs sections de mât 40 parmi la pluralité de sections de mât 40 stockée à terre ou en mer.

Il est tout de même envisageable que le mât 4M sur la structure flottante de montage 3M soit structurellement modifié, et en particulier renforcé, par rapport aux mâts 4R prévus sur les structures flottantes réceptrices 3R. Pour autant, le mât 4M présente la même hauteur que les mâts 4R.

Cette étape de fixation du mât 4M est suivie par une étape pour fixer l'engin de levage 7 sur le sommet du mât 4M prévu sur la structure flottante de montage 3M. Au sommet du mât 4M, il peut être prévu une bride supérieure spécifique servant à la fixation d'une bride de rotation de la turbine 5, et dans ce cas il est envisageable que cet engin de levage 7 soit adapté pour lui aussi être fixé sur une telle bride supérieure. Cet engin de levage 7 pourra lui-même avoir une couronne d'orientation ou alors une orientation fixe.

Pour monter le mât 4M sur la structure flottante de montage 3M et ensuite pour monter l'engin de levage 7 au sommet du mât 4M, il est envisageable d'employer une grue présente sur un quai. L'engin de levage 7 après installation pourra être testé suivant la règlementation en vigueur.

Dans le second mode de réalisation, il est prévu de fixer un engin de levage 700 sur une ou plusieurs colonnes 30 de la structure flottante de montage 3M, où cet engin de levage 700 comprend une structure de levage 701 ayant une hauteur suffisante pour lever et monter sur la structure flottante réceptrice 3R l'ensemble des éléments constitutifs 4, 40; 5; 6 de l'éolienne 2, autrement dit une hauteur supérieure à la hauteur de l'éolienne 2. Cet engin de levage 700 peut par exemple se présenter sous la forme d'une grue dite à flèche articulée, où la structure de levage 701 se présente sous la forme d'une flèche articulée sur une ou plusieurs colonnes 30.

Cette structure de levage 701 peut comprendre :
- un pylône articulé sur l'une des colonnes 30 (ce pylône formant alors la flèche articulée) ; ou
- deux pylônes reliés par une ou plusieurs traverses et articulés sur deux colonnes 30 respectives (ces deux pylônes et ce(s) traverse(s) formant alors la flèche articulée).

Cette structure de levage 701 peut être haubanée sur une autre colonne 30, au moyen d'haubans 702.

L'engin de levage 7, 700 peut comprendre un système de levage entraînant en monté/descente un câble de levage 70 porté par une flèche 71 ou par la structure de levage 701 et accouplé à un élément d'accrochage 72, où ce système de levage comprend par exemple un treuil de levage connecté à une centrale hydraulique, et l'alimentation de cette centrale hydraulique peut se fait à partir d'un groupe électrogène situé au niveau de la structure flottante de montage 3M, sur une colonne 30 et par exemple au pied du mât 4M. Le système de levage peut fonctionner en simple brin pour le levage de charges moins lourdes, comme par exemples des pâles, et peut fonctionner en multi brins, via un système de mouflage, pour des charges plus lourdes, comme par exemple une turbine 5. La flèche 71 ou la structure de levage 701 peut être orientable, autrement dit elle peut pivoter autour d'un axe vertical, et par exemple autour de l'axe du mât 4M (qui est vertical en situation) et elle peut optionnellement aussi être relevée/abaissée (autrement dit elle peut pivoter au niveau de son pied autour d'un axe horizontal, de sorte que la pointe de la flèche 71 ou de la structure de levage 701 peut être ajustée en hauteur et donc la charge peut être levée plus ou moins haute). Il est aussi envisageable que la flèche 71 ou la structure de levage 701 soit d'inclinaison fixe, autrement dit qu'elle ne puisse pas être relevée/abaissée.

Le contrôle/commande de l'engin de levage 7, 700 pour contrôler les opérations de levage, d'orientation et éventuellement de relevage/abaissement de la flèche 71 ou de la structure de levage 701, peut être fait en local à proximité de ce dernier, ou par télécommande (sans fil ou filaire) à partir d'un endroit distant.

Le procédé comprend ensuite les étapes de fixer sur la structure flottante de montage 3M un ou plusieurs dispositifs d'écartement inférieur 80 et également un agencement de stockage 82. De tels dispositifs d'écartement inférieur 80 ne sont pas illustrés sur les Figures 8 à 10 mais peuvent bien entendu être présents.

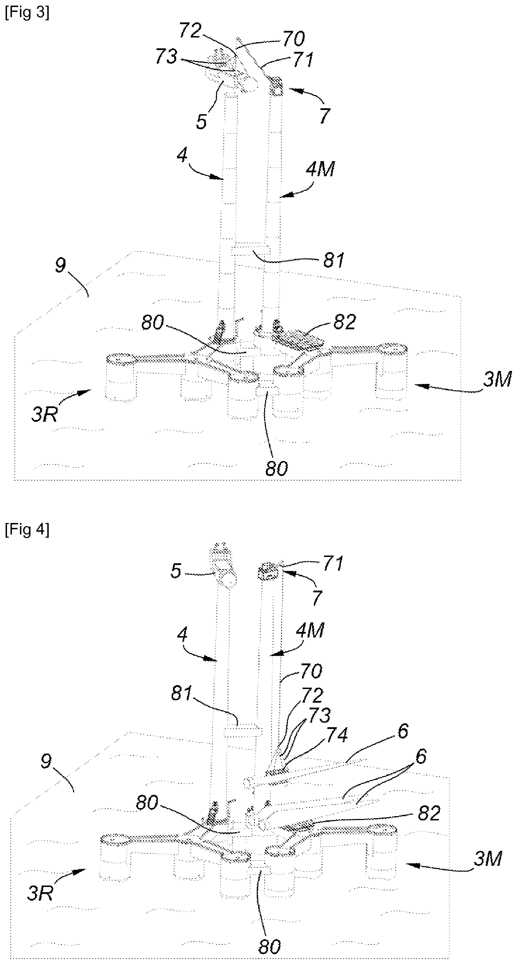

Le ou les dispositifs d'écartement inférieur 80 sont prévus sur les côtés de la structure flottante de montage 3M, de préférence au niveau de sa partie non-immergée, et leur fonction est de maintenir un écartement minimal avec la structure flottante réceptrice 3R, voire également de maintenir solidaires les deux structures flottantes 3M, 3R, lors des étapes qui suivront afin d'avoir une distance fixe entre les deux structures flottantes 3M, 3R. Sur les Figures 1 à 7, deux dispositifs d'écartement inférieur 80 sont prévus sur des colonnes 30 de la structure flottante de montage 3M. Comme visible sur les Figures 3 à 7 dans le premier mode de réalisation, il est également possible de prévoir un dispositif d'écartement supérieur 81 sur le mât 4M monté sur la structure flottante de montage 3M. Les dispositifs d'écartement inférieur et supérieur 80, 81 peuvent être munis d'amortisseurs respectifs qui permettront de limiter les mouvements relatifs entre les deux structures flottantes 3M, 3R.

L'agencement de stockage 82 est prévu sur le dessus de la partie non-immergée de la structure flottante de montage 3M, et sa fonction est de supporter pour stocker des éléments constitutifs d'une éolienne 2 tels que des sections de mât 40, une turbine 5 et des pâles 6, pas nécessairement tous en même temps selon la taille disponible. Bien entendu, une fois les éléments constitutifs en place sur l'agencement de stockage 82, ces derniers sont amarrés par exemple au moyen de liens. Ce stockage d'éléments constitutifs d'une éolienne 2 sur l'agencement de stockage 82 permettra de minimiser les allers-retours avec l'espace de stockage, qui est pour rappel à terre ou en mer.

Une fois que la structure flottante de montage 3M est équipée de son engin de levage 7, 700, éventuellement de son mât 4M pour le premier mode de réalisation, de ses dispositifs d'écartement inférieur et supérieur 80, 81 et de son agencement de stockage 82, le procédé est poursuivi avec des phases de montage successives des éoliennes 2 sur les structures flottantes réceptrices 3R, et la suite de la description porte sur une phase de montage d'une éolienne 2 sur une structure flottante réceptrice 3R.

La phase de montage commence par une étape de charger sur la structure flottante de montage 3M, et en particulier sur son agencement de stockage 82, un ou plusieurs éléments constitutifs d'une éolienne 2.

Pour ce chargement, il est envisageable d'amener la structure flottante de montage 3M en bordure de l'espace de stockage, par exemple en bordure d'un quai ou d'une barge de stockage, afin de charger sur l'agencement de stockage le ou les éléments constitutifs de l'éolienne 2, autrement dit opérer un transfert du ou des éléments constitutifs de l'éolienne 2 depuis l'espace de stockage jusqu'à la structure flottante de montage 3M. Ce chargement pourra s'opérer au moyen de l'engin de levage 7 ou d'une grue prévue au niveau de l'espace de stockage, donc une grue sur quai ou une grue sur barge.

En variante, il est envisageable d'accoster la structure flottante de montage 3M par un bateau ou une barge transportant le ou les éléments constitutifs de l'éolienne 2 afin de le(s) charger sur l'agencement de stockage 82. Dans ce cas, ce bateau ou cette barge effectue la navette entre l'espace de stockage et la structure flottante de montage 3M. Le chargement depuis le bateau ou la barge vers la structure flottante de montage 3M pourra s'opérer au moyen de l'engin de levage 7, 700 ou d'une grue prévue sur le bateau ou la barge.

Dans l'exemple de la Figure 1, la structure flottante de montage 3M est chargée avec des sections de mât 40 propres au montage d'un mât 4 sur la structure flottante réceptrice 3R, et avec aussi une turbine 5. Dans l'exemple de la Figure 4, la structure flottante de montage 3M est chargée avec des pâles 6, qui servent une fois que le mât 4 et la turbine 5 sont montés sur la structure flottante réceptrice 3R.

La phase de montage est suivie d'une étape d'approcher la structure flottante de montage 3M de la structure flottante réceptrice 3R, et utiliser l'engin de levage 7, 700 pour lever et monter sur cette structure flottante réceptrice l'un au moins des éléments constitutifs 4, 40, 5, 6 de l'éolienne 2.

Lors de cette étape d'approchement, il est envisageable que ce soit la structure flottante de montage 3M qui est convoyée jusqu'à la structure flottante réceptrice 3R, ou à l'inverse que ce soit la structure flottante réceptrice 3R qui est convoyée jusqu'à la structure flottante de montage 3M.

Par exemple, la structure flottante réceptrice 3R est ballastée et posée sur un fond de l'étendue d'eau 9 (par exemple sur le fond d'un port ou d'une baie) pendant toute la phase de montage, en prenant en compte les variations de marée et les conditions océanographiques et météorologiques assurant à la structure flottante réceptrice 3R de rester en place dans les conditions d'installation, voire également en cas de tempête avant et après montage de l'éolienne 2.

En variante, la structure flottante réceptrice 3R est maintenue flottante et est ancrée sur le fond de l'étendue d'eau 9 (par exemple sur le fond d'un port ou d'une baie) pendant toute la phase de montage.

La structure flottante de montage 3M, préalablement chargée, est ensuite remorquée jusqu'à la structure flottante réceptrice 3R et est accouplée à la structure flottante réceptrice 3R au moyen du ou des dispositifs d'écartement inférieur 80, et le cas échéant aussi le dispositif d'écartement supérieur 81. Ainsi, une fois que la structure flottante de montage 3M est approchée de la structure flottante réceptrice 3R, le ou les dispositifs d'écartement inférieur 80 sont intercalés entre la structure flottante réceptrice 3R et la structure flottante de montage 3M pour maintenir un écartement minimal. De cette manière, la structure flottante de montage 3M est maintenue flottante et elle est accouplée à la structure flottante réceptrice 3R pendant la phase de montage au moyen du ou des dispositifs d'écartement inférieur et supérieur 80, 81.

Plus précisément, le ou les dispositifs d'écartement inférieur 80 sont fixés sur la structure flottante réceptrice 3R à la suite du rapprochement de la structure flottante de montage 3M, solidarisant ainsi les deux structures flottantes 3M, 3R. Dans l'exemple illustré, les deux dispositifs d'écartement inférieur 81 sont fixés sur les colonnes 30 de la structure flottante réceptrice 3R, et sont ainsi intercalés entre les colonnes 30 de la structure flottante de montage 3M et les colonnes 30 de la structure flottante réceptrice 3R. Ainsi, après accostage et sécurisation de la structure flottante de montage 3M sur la structure flottante réceptrice 3R au moyen du ou des dispositifs d'écartement inférieur 80, le comportement de la structure flottante de montage 3M et éventuellement de la charge dans les dispositifs d'écartement inférieur 80 sont contrôlés.

Comme visible sur les Figures 3 à 7 pour le premier mode de réalisation, il est également possible de fixer le dispositif d'écartement supérieur 81 sur le mât 4 monté sur la structure flottante réceptrice 3R (lorsque ce mât 4 est présent), de sorte que ce dispositif d'écartement supérieur 81 solidarise entre eux le mât 4M, prévu sur la structure flottante de montage 3M, et le mât 4, prévu sur la structure flottante réceptrice 3R. Ce dispositif d'écartement supérieur 81 peut être situé au premier tiers du mat 4M et il est ainsi mis en place afin d'avoir un lien en trois points entre les deux structures flottantes 3M, 3R, permettant ainsi de diminuer les variations de distance entre l'axe du mât 4 et l'axe du mât 4M.

Aussi, le ou les dispositifs d'écartement inférieur et supérieur 80, 81 sont munis de moyens de fixation, comme par exemple des moyens de fixation par serrage, boulonnage, clampage, vissage, ventouse ... De manière avantageuse, le ou les dispositifs d'écartement inférieur et supérieur 80, 81 sont munis de moyens d'indexage ou de centrage, comme par exemple une extrémité libre de forme concave complémentaire de la forme des colonnes 30 et du mât 4 respectivement.

Les charges dans les dispositifs d'écartement inférieur et supérieur 80, 81 pourront être contrôlées et absorbées en temps réel pour éviter les surcharges dues à la structure flottante de montage 3M qui reste soumise à l'action du vent et de la houle. La structure flottante de montage 3M présente ainsi un système de ballastage qui est prévu pour à la fois compenser le marnage, permettre de maintenir un tirant d'eau sensiblement fixe (par exemple de l'ordre de 2 mètres sous la structure flottante de montage 3M) et ajuster une hauteur de l'engin de levage 7 lors de son utilisation pour lever et monter sur la structure flottante réceptrice 3R le ou les éléments constitutifs de l'éolienne 2.

Une fois que la structure flottante de montage 3M est accouplée à la structure flottante réceptrice 3R, la phase de montage comprend l'étape d'utiliser l'engin de levage 7, 700 pour lever et monter sur la structure flottante réceptrice 3R le ou les éléments constitutifs de l'éolienne 2 qui sont stockés sur l'agencement de stockage 82.

Sur les Figures 1 à 3, 8 et 9, l'engin de levage 7 est utilisé pour lever et monter sur la structure flottante réceptrice 3R le mât 4 de l'éolienne 2, en levant et montant au fur et à mesure les sections de mât 40 correspondantes au moyen de l'engin de levage 7, puis pour lever et monter sur la structure flottante réceptrice 3R la turbine 5, au sommet du mât 4 préalablement monté sur la structure flottante réceptrice 3R.

Il est à noter que, lorsque le mât 4 a été monté sur la structure flottante réceptrice 3R, le dispositif d'écartement supérieur 81 peut être fixé entre le mât 4M et le mât 4, stabilisant ainsi les deux mâts 4, 4M pour faciliter le centrage et l'installation.

Pour lever et monter les sections de mât 40, il est envisageable d'accrocher les sections de mât 40 sur l'élément d'accrochage 72 via des élingues 73. De même, pour lever et monter la turbine 5, il est envisageable d'accrocher la turbine 5 sur l'élément d'accrochage 72 via des élingues 73.

Sur les figures 4 à 7 et 10, l'engin de levage 7, 700 est utilisé pour lever et monter sur la structure flottante réceptrice 3R les pâles 6 de l'éolienne 2 jusqu'à la turbine 5, après avoir préalablement montés le mât 4 et la turbine 5 sur cette structure flottante réceptrice 3R. Il est à noter que le mât 4 et la turbine 5 peuvent avoir été montés sur la structure flottante réceptrice 3R selon les étapes décrites ci-dessus en référence aux Figures 1 à 3, ou bien peuvent avoir été montés sur la structure flottante réceptrice 3R au moyen d'une grue, comme par exemple la même grue présente sur un quai qui a servi à monter le mât 4M et l'engin de levage 7, 700 sur la structure flottante de montage 3M.

Pour lever et monter ces pâles 6, il est envisageable d'accrocher une pince d'accrochage 74 à l'élément d'accrochage 72, par exemple via des élingues 73, et de saisir et lever chaque pâle 6 au moyen de cette pince d'accrochage 74. Une telle pince d'accrochage 74 est avantageusement une pince d'accrochage à plusieurs degrés de liberté, qui est munie d'un système de réglage permettant des réglages selon au moins deux degrés de liberté en rotation, et par exemple trois degrés de liberté en rotation, et selon au moins deux degrés de liberté en translation, ce qui est avantageux pour positionner et orienter correctement les pâles 6 sur la turbine 5.

Ainsi, la pâle 6 et la pince d'accrochage 74 sont levées par l'engin de levage 7, 700 jusqu'à proximité de la turbine 5 se trouvant au sommet du mât 4. Dans le premier mode de réalisation, il est envisageable de prévoir un guidage de la pince d'accrochage 74 avec sa pâle 6 le long du mât 4M lors du levage, au moyen d'un rail de guidage (non illustré) fixé sur ce mât 4M, permettant ainsi de fiabiliser le levage des pâles 6 et ainsi augmenter les critères météorologiques de tenue au vent si nécessaire ou le contrôle en mer pour minimiser l'impact de la houle.

Lorsque la pâle 6 est à proximité de la turbine 5, l'approche de la pâle 6 sera faite par l'engin de levage 7, 700, le treuil de levage associé pouvant avantageusement être équipé d'une fonction de compensation de houle en option afin de réduire le mouvement de pilonnement de la structure flottante de montage 3M si nécessaire. La pâle 6 pourra ensuite être insérée sur la turbine 5 à l'horizontale ou inclinée en fonction de la pince d'accrochage 74. La pâle 6 est donc accouplée à la turbine 5 et des écrous sont mis en place pour sécuriser la pâle 6. La pâle 6 est maintenue par l'engin de levage 7, 700 et la pince d'accrochage 74, jusqu'à la mise en sécurité, avec ou sans compensation de pilonnement, puis la pince d'accrochage 74 est ouverte et déconnectée de la pâle 6 pour être libre d'aller saisir une autre pâle 6 stockée sur l'agencement de stockage 82.

A la fin de la phase de montage, une fois que l'éolienne 2 est assemblée sur la structure flottante réceptrice 3R, le ou les dispositifs d'écartement inférieur et supérieur 80, 81 sont désolidarisés de la structure flottante réceptrice 3R et du mât 4, de sorte que la structure flottante de montage 3M est désaccouplée de la structure flottante réceptrice 3R.

Ainsi, la structure flottante de montage 3M peut être remorquée vers une autre structure flottante réceptrice 3R et la phase de montage pourra être répétée pour les autres structures flottantes réceptrices 3R.

Une fois que toutes les structures flottantes réceptrices 3R sont équipées de leurs éoliennes 2 respectives, deux possibilités sont envisageables pour la structure flottante de montage 3M qui a fini de remplir sa fonction.

Selon une première possibilité, la structure flottante de montage 3M est rapprochée d'un quai sur lequel est prévu une grue (comme par exemple la même grue présente sur un quai qui a servi à monter le mât 4M et/ou l'engin de levage 7, 700 sur la structure flottante de montage 3M) et, au moyen de cette grue, l'engin de levage 7, 700 est retiré de la structure flottante de montage 3M, et en particulier dans le premier mode de réalisation l'engin de levage 7 est retiré du sommet du mât 4M afin de permettre de monter sur son sommet, toujours au moyen de cette grue, une turbine 5 et des pâles 6. Ainsi, la structure flottante de montage 3M servira à former une dernière et N^{ème} centrale éolienne offshore flottante 1. A l'issue du procédé, le parc éolien offshore flottant comprendra donc N centrales éoliennes offshore flottantes 1, dont (N-1) issues de structures flottantes réceptrices 3R et une N^{ème} issue de la structure flottante de montage 3M.

Selon une seconde possibilité, la structure flottante de montage 3M n'est pas utilisée pour former une centrale éolienne offshore flottante 1, du moins pas dans l'immédiat. Aussi, pour que le parc éolien offshore flottant puisse comprendre N centrales éoliennes offshore flottantes 1, sont fournis au départ (N+1) structures flottantes sur l'étendue d'eau 9, et alors N centrales éoliennes offshore flottantes 1 sont issues de N structures flottantes réceptrices 3R, et la dernière et (N+1)^{ème} structure flottante formera la structure flottante de montage 3M. A l'issue du procédé, cette structure flottante de montage 3M, avec éventuellement son mât 4M et son engin de levage 7, 700 (à moins que ce dernier soit retiré pour un autre usage), est stockée dans un lieu prédéfini, et elle pourra par exemple être :
- réutilisée ultérieurement pour le développement d'un nouveau parc éolien offshore flottant, similaires ou de hauteur équivalente ou inférieure ;
- utilisée pour réaliser une maintenance en mer en cas de dommage sur une pâle 6 d'une éolienne 2 sur une partie de turbine 5 à remplacer ou réparer.

## Revendications

1. Procédé d'assemblage d'un parc éolien offshore flottant, pour un assemblage dans une étendue d'eau (9) d'au moins N centrales éoliennes offshore flottantes (1), N étant un entier supérieur ou égal à 3, dans lequel chaque centrale éolienne offshore flottante (1) comprend au moins une éolienne (2) montée sur une structure flottante (3), ladite éolienne (2) comprenant un assemblage de plusieurs éléments constitutifs (4, 40; 5; 6) incluant au moins un mât (4) fixé sur la structure flottante (3) et composé d'un empilement de plusieurs sections de mât (40), une turbine (5) fixée sur un sommet du mât (4), et des pâles (6) accouplées à ladite turbine (5), ledit procédé d'assemblage d'un parc éolien offshore flottant comprenant les étapes suivantes :
- fournir et disposer au moins N structures flottantes (3) sur l'étendue d'eau (9) ;
- fournir une pluralité de sections de mât (40) pour assembler au moins N mâts (4) ;
- fournir des turbines (5) et des pâles (6) pour au moins N éoliennes (2) ;
ledit procédé d'assemblage d'un parc éolien offshore flottant étant **caractérisé en ce qu'**il comprend les étapes suivantes :
- sélectionner, parmi les au moins N structures flottantes (3), au moins une structure flottante appelée structure flottante de montage (3M), les autres structures flottantes étant appelées structures flottantes réceptrices (3R) ;
- fixer un engin de levage (7 ; 700) sur la structure flottante de montage (3M) ;
- approcher la structure flottante de montage (3M) de l'une des structures flottantes réceptrices (3R), et utiliser l'engin de levage (7 ; 700) pour lever et monter sur ladite structure flottante réceptrice (3R) l'un au moins des éléments constitutifs (4, 40; 5; 6) de l'éolienne (2) ;
- répéter l'étape précédente pour les autres structures flottantes réceptrices (3R).

2. Procédé d'assemblage d'un parc éolien offshore flottant selon la revendication 1, comprenant la fixation d'un mât (4M) sur la structure flottante de montage (3M), par empilement de plusieurs sections de mât (40) parmi la pluralité de sections de mât (40), et dans lequel l'engin de levage (7) est fixé sur le sommet du mât (4M) prévu sur la structure flottante de montage (3M).

3. Procédé d'assemblage d'un parc éolien offshore flottant selon la revendication 1, dans lequel l'engin de levage (700) comprend une structure de levage (701) ayant une hauteur suffisante pour lever et monter sur la structure flottante réceptrice (3R) l'ensemble des éléments constitutifs (4, 40; 5; 6) de l'éolienne (2).

4. Procédé d'assemblage d'un parc éolien offshore flottant selon l'une quelconque des revendications précédentes, dans lequel, une fois que la structure flottante de montage (3M) est approchée de la structure flottante réceptrice (3R), au moins un dispositif d'écartement inférieur (80) est intercalé entre la structure flottante réceptrice (3R) et la structure flottante de montage (3M) pour maintenir un écartement minimal.

5. Procédé d'assemblage d'un parc éolien offshore flottant selon la revendication 4, dans lequel l'au moins un dispositif d'écartement inférieur (80) est fixé sur la structure flottante de montage (3M) et est fixé sur la structure flottante réceptrice (3R) à la suite du rapprochement de la structure flottante de montage (3M), solidarisant ainsi la structure flottante réceptrice (3R) et la structure flottante de montage (3M).

6. Procédé d'assemblage d'un parc éolien offshore flottant selon l'une quelconque des revendications précédentes, dans lequel un système de ballastage est prévu sur la structure flottante de montage (3M) pour ajuster une hauteur de l'engin de levage (7 ; 700) lors de son utilisation pour lever et monter sur la structure flottante réceptrice (3R) l'un au moins des éléments constitutifs (4, 40; 5; 6) de l'éolienne (2).

7. Procédé d'assemblage d'un parc éolien offshore flottant selon l'une quelconque des revendications précédentes, dans lequel l'engin de levage (7 ; 700) est utilisé pour lever et monter sur la structure flottante réceptrice (3R) les pâles (6) de l'éolienne (2) jusqu'à la turbine (5), après avoir préalablement montés le mât (4) et la turbine (5) sur ladite structure flottante réceptrice (3R).

8. Procédé d'assemblage d'un parc éolien offshore flottant selon l'une quelconque des revendications précédentes, dans lequel l'engin de levage (7 ; 700) est utilisé pour lever et monter sur la structure flottante réceptrice (3R) le mât (4) de l'éolienne (2), en levant et montant au fur et à mesure les sections de mât (40) correspondantes au moyen de l'engin de levage (7 ; 700).

9. Procédé d'assemblage d'un parc éolien offshore flottant selon l'une quelconque des revendications précédentes, dans lequel l'engin de levage (7 ; 700) est utilisé pour lever et monter sur la structure flottante réceptrice (3R) la turbine (5), après avoir préalablement monté le mât (4) sur ladite structure flottante réceptrice (3R).

10. Procédé d'assemblage d'un parc éolien offshore flottant selon l'une quelconque des revendications précédentes, dans lequel l'un au moins des éléments constitutifs (4, 40; 5; 6) de l'éolienne (2), prévu pour être levé et monté sur la structure flottante réceptrice (3R) au moyen de l'engin de levage (7 ; 700), est préalablement stocké sur un agencement de stockage (82) prévu sur la structure flottante de montage (3M).

11. Procédé d'assemblage d'un parc éolien offshore flottant selon l'une quelconque des revendications précédentes, dans lequel l'engin de levage (7 ; 700) comprend un système de levage entraînant en monté/descente un câble de levage (70) porté par une flèche (71) ou par une structure de levage (701) et accouplé à un élément d'accrochage (72), de sorte que le ou les éléments constitutifs (4, 40; 5; 6) de l'éolienne (2), qui est ou sont levé(s) et monté(s) sur la structure flottante réceptrice (3R) au moyen de l'engin de levage (7 ; 700), est ou sont accroché(s) audit élément d'accrochage (72) avant d'être monté(s).

12. Procédé d'assemblage d'un parc éolien offshore flottant selon la revendication 11, dans lequel l'élément d'accrochage (72) est accouplé à une pince d'accrochage (74) à plusieurs degrés de liberté munie d'un système de réglage permettant des réglages selon au moins deux degrés de liberté en rotation, et par exemple trois degrés de liberté en rotation, et selon au moins deux degrés de liberté en translation.

13. Procédé d'assemblage d'un parc éolien offshore flottant selon l'une quelconque des revendications précédentes, dans lequel la structure flottante réceptrice (3R) est posée sur un fond de l'étendue d'eau (9) ou est maintenue flottante et ancrée sur le fond de l'étendue d'eau (9) pendant l'utilisation de l'engin de levage (7 ; 700) pour lever et monter sur ladite structure flottante réceptrice (3R) l'un au moins des éléments constitutifs (4, 40; 5; 6) de l'éolienne (2).

14. Procédé d'assemblage d'un parc éolien offshore flottant selon l'une quelconque des revendications précédentes, dans lequel la structure flottante de montage (3M) est posée sur un fond de l'étendue d'eau (9) ou est maintenue flottante et accouplée à la structure flottante réceptrice (3R) pendant l'utilisation de l'engin de levage (7 ; 700) pour lever et monter sur ladite structure flottante réceptrice (3R) l'un au moins des éléments constitutifs (4, 40; 5; 6) de l'éolienne (2).

15. Procédé d'assemblage d'un parc éolien offshore flottant selon l'une quelconque des revendications précédentes, dans lequel les au moins N structures flottantes (3) sont toutes fabriquées sur la base d'une même structure de type semi-submersible.

## Patentansprüche

1. Verfahren zum Zusammenbau eines schwimmenden Offshore-Windparks, für einen Zusammenbau von mindestens N schwimmenden Offshore-Windkraftanlagen (1) in einem Gewässer (9), wobei N eine ganze Zahl größer oder gleich 3 ist, wobei jede schwimmende Offshore-Windkraftanlage (1) mindestens ein Windrad (2) umfasst, das auf einer schwimmenden Struktur (3) montiert ist, wobei das Windrad (2) einen Zusammenbau mehrerer Bestandteile (4, 40; 5; 6) umfasst, die mindestens einen Mast (4) einschließen, der an der schwimmenden Struktur (3) befestigt ist und aus einem Stapel mehrerer Mastabschnitte (40) besteht, eine Turbine (5), die an einer Oberseite des Mastes (4) befestigt ist, und Rotorblätter (6), die mit der Turbine (5) verbunden sind, wobei das Verfahren zum Zusammenbau eines schwimmenden Offshore-Windparks die folgenden Schritte umfasst:
- Bereitstellen und Anordnen von mindestens N schwimmenden Strukturen (3) auf dem Gewässer (9);
- Bereitstellen einer Vielzahl von Mastabschnitten (40) zum Zusammenbauen von mindestens N Masten (4);
- Bereitstellen von Turbinen (5) und Rotorblättern (6) für mindestens N Windräder (2);
wobei das Verfahren zum Zusammenbau eines schwimmenden Offshore-Windparks **dadurch gekennzeichnet ist, dass** es die folgenden Schritte umfasst:
- Auswählen, aus den mindestens N schwimmenden Strukturen (3), mindestens einer schwimmenden Struktur, schwimmende Montage-Struktur (3M) genannt, wobei die anderen schwimmenden Strukturen aufnehmende schwimmende Strukturen (3R) genannt werden;
- Befestigen eines Hebegeräts (7; 700) an der schwimmenden Montage-Struktur (3M);
- Annähern der schwimmenden Montage-Struktur (3M) an eine der aufnehmenden schwimmenden Strukturen (3R), und Verwenden des Hebegeräts (7; 700) zum Anheben mindestens eines der Bestandteile (4, 40; 5; 6) des Windrads (2) und Montieren an der aufnehmenden schwimmenden Struktur (3R);
- Wiederholen des vorhergehenden Schrittes für die anderen aufnehmenden schwimmenden Strukturen (3R).

2. Verfahren zum Zusammenbau eines schwimmenden Offshore-Windparks nach Anspruch 1, das Befestigen eines Mastes (4M) an der schwimmenden Montage-Struktur (3M) umfassend, durch Stapeln mehrerer Mastabschnitte (40) aus der Vielzahl von Mastabschnitten (40), wobei das Hebegerät (7) an der Oberseite des Mastes (4M) befestigt ist, der auf der schwimmenden Montage-Struktur (3M) vorgesehen ist.

3. Verfahren zum Zusammenbau eines schwimmenden Offshore-Windparks nach Anspruch 1, wobei das Hebegerät (700) eine Hebestruktur (701) umfasst, die eine ausreichende Höhe aufweist, um die Gesamtheit der Bestandteile (4, 40; 5; 6) des Windrades (2) anzuheben und an der aufnehmenden schwimmenden Struktur (3R) zu montieren.

4. Verfahren zum Zusammenbau eines schwimmenden Offshore-Windparks nach einem der vorhergehenden Ansprüche, wobei, sobald die schwimmende Montage-Struktur (3M) an die aufnehmende schwimmende Struktur (3R) angenähert ist, mindestens eine untere Entfernungsanordnung (80) zwischen der aufnehmenden schwimmenden Struktur (3R) und der schwimmenden Montage-Struktur (3M) angeordnet wird, um eine minimale Entfernung aufrechtzuerhalten.

5. Verfahren zum Zusammenbau eines schwimmenden Offshore-Windparks nach Anspruch 4, wobei mindestens eine untere Entfernungsanordnung (80) an der schwimmenden Montage-Struktur (3M) befestigt wird und an der aufnehmenden schwimmenden Struktur (3R) befestigt wird, nach der Annäherung der schwimmenden Montage-Struktur (3M), wodurch die aufnehmende schwimmende Struktur (3R) und die schwimmende Montage-Struktur (3M) fest miteinander verbunden werden.

6. Verfahren zum Zusammenbau eines schwimmenden Offshore-Windparks nach einem der vorhergehenden Ansprüche, wobei an der schwimmenden Montage-Struktur (3M) ein Beschwerungssystem vorgesehen ist, um eine Höhe des Hebegeräts (7; 700) während ihrer Verwendung einzustellen, um mindestens eines der Bestandteile (4, 40; 5; 6) des Windrades (2) anzuheben und an der aufnehmenden schwimmenden Struktur (3R) zu montieren.

7. Verfahren zum Zusammenbau eines schwimmenden Offshore-Windparks nach einem der vorhergehenden Ansprüche, wobei das Hebegerät (7; 700) verwendet wird zum Anheben der Rotorblätter (6) des Windrades (2) bis an die Turbine (5) und Montieren an die aufnehmende schwimmende Struktur (3R), nachdem zuvor der Mast (4) und die Turbine (5) an der aufnehmenden schwimmenden Struktur (3R) montiert wurden.

8. Verfahren zum Zusammenbau eines schwimmenden Offshore-Windparks nach einem der vorhergehenden Ansprüche, wobei das Hebegerät (7; 700) verwendet wird zum Anheben des Mastes (4) des Windrades (2) und Montieren an der aufnehmenden schwimmenden Struktur (3R), wobei die entsprechenden Mastabschnitte (40) mittels des Hebegeräts (7; 700) nach und nach angehoben und montiert werden.

9. Verfahren zum Zusammenbau eines schwimmenden Offshore-Windparks nach einem der vorhergehenden Ansprüche, wobei das Hebegerät (7; 700) verwendet wird zum Anheben der Turbine (5) und Montieren an der aufnehmenden schwimmenden Struktur (3R), nachdem zuvor der Mast (4) an der aufnehmenden schwimmenden Struktur (3R) montiert wurde.

10. Verfahren zum Zusammenbau eines schwimmenden Offshore-Windparks nach einem der vorhergehenden Ansprüche, wobei mindestens eines der Bestandteile (4, 40; 5; 6) des Windrades (2), das vorgesehen ist, um mittels des Hebegeräts (7; 700) angehoben und an der aufnehmenden schwimmenden Struktur (3R) montiert zu werden, zuvor auf einer Auflagevorrichtung (82) gelagert wird, die auf der schwimmenden Montage-Struktur (3M) vorgesehenen ist.

11. Verfahren zum Zusammenbau eines schwimmenden Offshore-Windparks nach einem der vorhergehenden Ansprüche, wobei das Hebegerät (7; 700) ein Hebesystem umfasst, das ein Hebeseil (70) auf- und abbewegt, das von einem Ausleger (71) oder einer Hebestruktur (701) getragen wird, und so mit einem Einhängeteil (72) verbunden ist, dass das oder die Bestandteile (4, 40; 5; 6) des Windrades (2), das (die) angehoben und an der aufnehmenden schwimmenden Struktur (3R) mittels des Hebegeräts (7; 700) montiert wird (werden), an das Einhängeteil (72) angeschlossen wird (werden), bevor es (sie) montiert wird (werden).

12. Verfahren zum Zusammenbau eines schwimmenden Offshore-Windparks nach Anspruch 11, wobei das Einhängeteil (72) mit einer Einhängeklemme (74) mit mehreren Freiheitsgraden verbunden ist, die mit einem Einstellsystem versehen ist, das Einstellungen gemäß mindestens zwei Freiheitsgraden in Rotation ermöglicht, und beispielsweise drei Freiheitsgraden in Rotation und gemäß mindestens zwei Freiheitsgraden in Translation.

13. Verfahren zum Zusammenbau eines schwimmenden Offshore-Windparks nach einem der vorhergehenden Ansprüche, wobei die aufnehmende schwimmende Struktur (3R) auf einem Grund des Gewässers (9) positioniert ist oder am Grund des Gewässers (9) schwimmend gehalten und verankert wird, während der Verwendung des Hebegeräts (7; 700), zum Anheben mindestens eines der Bestandteile (4, 40; 5; 6) des Windrads (2) und Montieren an der aufnehmenden schwimmenden Struktur (3R).

14. Verfahren zum Zusammenbau eines schwimmenden Offshore-Windparks nach einem der vorhergehenden Ansprüche, wobei die schwimmende Montage-Struktur (3M) auf einem Grund des Gewässers (9) positioniert wird oder schwimmend gehalten wird und mit der aufnehmenden schwimmenden Struktur (3R) verbunden, während der Verwendung des Hebegeräts (7; 700), zum Anheben mindestens eines der Bestandteile (4, 40; 5; 6) des Windrads (2) und Montieren an der aufnehmenden schwimmenden Struktur (3R).

15. Verfahren zum Zusammenbau eines schwimmenden Offshore-Windparks nach einem der vorhergehenden Ansprüche, wobei die mindestens N schwimmenden Strukturen (3) alle auf der Grundlage derselben halbtauchbaren Struktur hergestellt sind.

## Claims

1. A method for assembling a floating offshore wind farm, for an assembly in a body of water (9) of at least N floating offshore wind power plants (1), N being an integer greater than or equal to 3, wherein each floating offshore wind power plant (1) comprises at least one wind turbine (2) mounted on a floating structure (3), said wind turbine (2) comprising an assembly of several constituent elements (4, 40; 5; 6) including at least one mast (4) fixed on the floating structure (3) and composed of a stack of several mast sections (40), a turbine (5) fixed on a top of the mast (4), and blades (6) coupled to said turbine (5),
said method for assembling a floating offshore wind farm comprising the following steps of:
- providing and placing at least N floating structures (3) on the body of water (9);
- providing a plurality of mast sections (40) for assembling at least N masts (4);
- providing turbines (5) and blades (6) for at least N wind turbines (2);
said method for assembling a floating offshore wind farm being **characterized in that** it comprises the following steps of:
- selecting, among the at least N floating structures (3), at least one floating structure called floating mounting structure (3M), the other floating structures being called receiving floating structures (3R);
- fastening a lifting device (7; 700) on the floating mounting structure (3M);
- moving the floating mounting structure (3M) up to one of the receiving floating structures (3R), and using the lifting device (7; 700) to lift and mount at least one of the constituent elements (4, 40; 5; 6) of the wind turbine (2) onto said receiving floating structure (3R);
- repeating the preceding step for the other receiving floating structures (3R).

2. The method for assembling a floating offshore wind farm according to claim 1, comprising the fastening of a mast (4M) on the floating mounting structure (3M), by stacking several mast sections (40) among the plurality of mast sections (40), and wherein the lifting device (7) is fixed on the top of the mast (4M) provided on the floating mounting structure (3M).

3. The method for assembling a floating offshore wind farm according to claim 1, wherein the lifting device (700) comprises a lifting structure (701) having sufficient height to lift and mount all of the constituent elements (4, 40; 5; 6) of the wind turbine (2) onto the receiving floating structure (3R).

4. The method for assembling a floating offshore wind farm according to any one of the preceding claims, wherein, once the floating mounting structure (3M) has moved up to the receiving floating structure (3R), at least one lower spacing device (80) is interposed between the receiving floating structure (3R) and the floating mounting structure (3M) to maintain a minimum spacing.

5. The method for assembling a floating offshore wind farm according to claim 4, wherein the at least one lower spacing device (80) is fixed to the floating mounting structure (3M) and is fixed to the receiving floating structure (3R) following the movement of the floating mounting structure (3M), thus securing the receiving floating structure (3R) and the floating mounting structure (3M).

6. The method for assembling a floating offshore wind farm according to any one of the preceding claims, wherein a ballasting system is provided on the floating mounting structure (3M) to adjust a height of the lifting device ( 7; 700) when it is used to lift and mount at least one of the constituent elements (4, 40; 5; 6) of the wind turbine (2) onto the receiving floating structure (3R).

7. The method for assembling a floating offshore wind farm according to any one of the preceding claims, wherein the lifting device (7; 700) is used to lift and mount the blades (6) from the wind turbine (2) up to the turbine (5) onto the receiving floating structure (3R), after having previously mounted the mast (4) and the turbine (5) onto said receiving floating structure (3R).

8. The method for assembling a floating offshore wind farm according to any one of the preceding claims, wherein the lifting device (7; 700) is used to lift and mount the mast (4) of the wind turbine (2) onto the receiving floating structure (3R), gradually lifting and mounting the corresponding mast sections (40) by means of the lifting device (7; 700).

9. The method for assembling a floating offshore wind farm according to any one of the preceding claims, wherein the lifting device (7; 700) is used to lift and mount the turbine (5) onto the receiving floating structure (3R), after having previously mounted the mast (4) onto said receiving floating structure (3R).

10. The method for assembling a floating offshore wind farm according to any one of the preceding claims, wherein at least one of the constituent elements (4, 40; 5; 6) of the wind turbine (2), provided to be lifted and mounted on the receiving floating structure (3R) by means of the lifting device (7; 700), is previously stored on a storage arrangement (82) provided on the floating mounting structure (3M).

11. The method for assembling a floating offshore wind farm according to any one of the preceding claims, wherein the lifting device (7; 700) comprises a lifting system driving up/down a lifting cable (70) carried by a jib (71) or by a lifting structure (701) and coupled to a hooking element (72), so that the constituent element(s) (4, 40; 5; 6) of the wind turbine (2), which is or are lifted and mounted on the receiving floating structure (3R) by means of the lifting device (7; 700), is or are hooked to said hooking element (72) before being mounted.

12. The method for assembling a floating offshore wind farm according to claim 11, wherein the hooking element (72) is coupled to a hooking clamp (74) having several degrees of freedom and provided with an adjustment system allowing adjustments according to at least two degrees of freedom in rotation, and for example three degrees of freedom in rotation, and according to at least two degrees of freedom in translation.

13. The method for assembling a floating offshore wind farm according to any one of the preceding claims, wherein the receiving floating structure (3R) is laid on a bottom of the body of water (9) or is held floating and anchored to the bottom of the body of water (9) during the use of the lifting device (7; 700) to lift and mount at least one of the constituent elements (4, 40; 5; 6) of the wind turbine (2) onto said receiving floating structure (3R).

14. The method for assembling a floating offshore wind farm according to any one of the preceding claims, wherein the floating mounting structure (3M) is laid on a bottom of the body of water (9) or is held floating and coupled to the receiving floating structure (3R) during the use of the lifting device (7; 700) to lift and mount at least one of the constituent elements (4, 40 5; 6) of the wind turbine (2) onto said receiving floating structure (3R).

15. The method for assembling a floating offshore wind farm according to any one of the preceding claims, wherein the at least N floating structures (3) are all manufactured on the basis of a same structure of the semi-submersible type.
